# EUROPEAN PATENT APPLICATION

(11) **EP 2 338 713 A1**
(43) Date of publication of application: **29.06.2011**
(21) Application number: 09820666.7
(22) Date of filing: 15.01.2009
(51) Int. Cl.: B60H 3/00

(54) **DEHUMIDIFICATION SYSTEM FOR A VEHICLE**

(30) Priority: 13.10.2008 KR 20080100136
(71) Applicant: Korea Air Conditioning Tech Co.,ltd, Gumcheon-gu, Seoul 153-010 (KR); Lee, Geon-Soo, Gumcheon-gu, Seoul 153-010 (KR)
(72) Inventor: LEE, Geon-Soo, Gumcheon-gu Seoul 153-010 (KR)
(74) Representative: Hocking, Adrian Niall
(86) International application number: PCT/KR2009/000216
(87) International publication number: WO 2010/044516

(57) **Abstract**

The present invention relates to a dehumidification system for a vehicle, which is developed to remove humidity from the vehicle interior through a separate path from an air-conditioner or a cooling system, installed in the existing vehicle. An air-conditioning system for the vehicle has a circulation path in which an inner refrigerant passes through an evaporator with a blower fan blowing air into the interior of the vehicle from a condenser via an expansion valve, and the inner refrigerant is returned to the condenser by a compressor. The dehumidification system for the vehicle is comprised of a water jacket, a heat-exchanger, and a circulation conduit. The water jacket with a conduit which is extended therein for heat absorption is positioned close to the vehicle engine in order to absorb the heat thereof. The heat-exchanger is located on the path in which the vehicle' interior air is circulated and cooled by the blower fan and removes the humidity by condensing the surrounding air. The circulation conduit is comprised of a first conduit and a second conduit. The first conduit supplies the heated fluid or gas in the water jacket to the heat-exchanger and has a valve on the fluid or gas supply path. The second conduit transfers and circulates the fluid or gas, which is condensed in the heat-exchanger, to the water jacket, and has a check valve in the middle thereof to move the fluid or gas in the fixed direction.

## Description

### [Technical Field]

The present invention relates to a dehumidification system for a vehicle, and more particularly, to a dehumidification system for a vehicle, which is developed to remove displeasure due to high humidity or to defrost or defog on a rainy day or on a day of high temperature and humidity in the rainy season through a separate path from an air conditioner for cooling or a heater for heating the interior of the vehicle.

### [Background Art]

With development of automotive industry and an increase of automotive supply, households normally have at least one vehicle.

In Korea having four distinct seasons, people operate an air conditioner to cool the interior of the vehicle in the summer season and operate a heater to heat the interior of the vehicle and defrost and defog windows of the vehicle in the winter season.

However, because vehicles are not equipped with a dehumidification system, when a driver turn on the air conditioner in hot and humid weather, it can lower temperature but cannot reduce the humidity, and hence, the driver feels displeasure due to the high humidity and moisture. Accordingly, many people use dehumidifying agents to reduce the humidity, but it is less effective.

As another method to lower the humidity, there is a method to operate the heater installed in the vehicle, but it is virtually impossible in the summer season.

### [Disclosure]

### [Technical Problem]

Accordingly, the present invention has been made in an effort to solve the above-mentioned problems occurring in the prior arts, and it is an object of the present invention to provide a dehumidification system for a vehicle to remove humidity from the interior of the vehicle using heat of an air conditioning system and an engine of the vehicle.

### [Technical Solution]

To achieve the above objects, the present invention provides a dehumidification system for a vehicle, which is installed in an air-conditioning system in which an inner refrigerant passes through an evaporator with a blower fan blowing air into the interior of the vehicle from a condenser via an expansion valve, and then, is returned to the condenser by a compressor, includes: a water jacket with a conduit that is extended therein for heat absorption, the water jacket being positioned close to the vehicle engine in order to absorb the heat of the engine; a heat-exchanger located on the path, in which the inside air of the vehicle is circulated and cooled by the blower fan, for removing the humidity by condensing the surrounding air; and a circulation conduit having a first conduit and a second conduit, the first conduit supplying the heated fluid or gas in the water jacket to the heat-exchanger and having a valve mounted on the fluid or gas supply path, the second conduit adapted to transfer and circulate the fluid or gas, which is condensed in the heat-exchanger, to the water jacket, the second conduit having a check valve formed in the middle thereof to move the fluid or gas in the fixed direction.

Moreover, the conduit formed in the water jacket has first and second 3-way valves respectively mounted at a start point and an end point thereof and a circulation conduit formed to connect the first and second 3-way valves with each other.

### [Advantageous Effects]

As described above, the dehumidification system for the vehicle according to the present invention can promote a pleasant environment by keeping the humidity down in the interior of the vehicle and rarely causes an energy loss because it can remove the humidity from the interior of the vehicle using heat naturally generated from a vehicle engine.

Moreover, on a day of high temperature and humidity in the rainy season of summer, when a driver operates a cooling system, the inside temperature of the vehicle gets lower but the humidity is still high, and hence, the discomfort index is high due to high humidity and the driver may feel difficulty in driving. In this instance, the humidification system according to the present invention can create a pleasant interior environment and refresh the driver by keeping the humidity down.

### [Description of Drawings]

FIG. 1 is a conceptual diagram showing an installation state of a dehumidification system for a vehicle according to a preferred embodiment of the present invention.
FIG. 2 is a brief view of an engine cooling state of the dehumidification system.
FIG. 3 is a brief view of a dehumidification state of the dehumidification system.

### <Explanation of essential reference numerals in drawings>

- 1:: condenser
- 2:: compressor
- 3:: evaporator
- 31:: blower fan 32: expansion valve
- 4:: water jacket
- 41:: conduit
- 42:: first 3-way valve
- 5:: heat-exchanger
- 6:: circulation conduit
- 61:: first conduit 62: second conduit
- 63:: valve
- 64:: check valve

### [Mode for Invention]

Reference will be now made in detail to the preferred embodiment of the present invention with reference to the attached drawings.

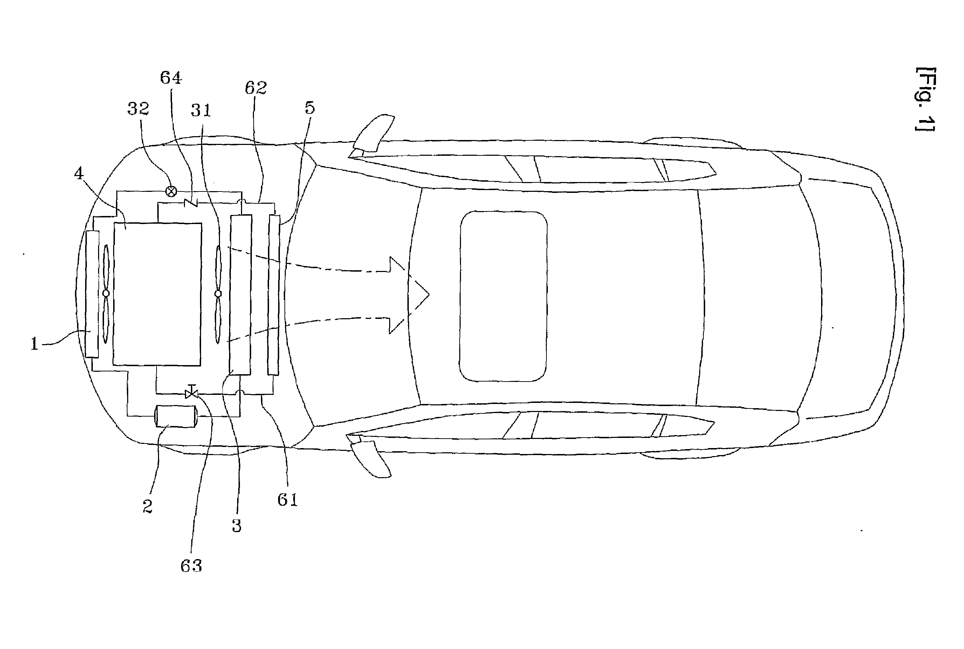

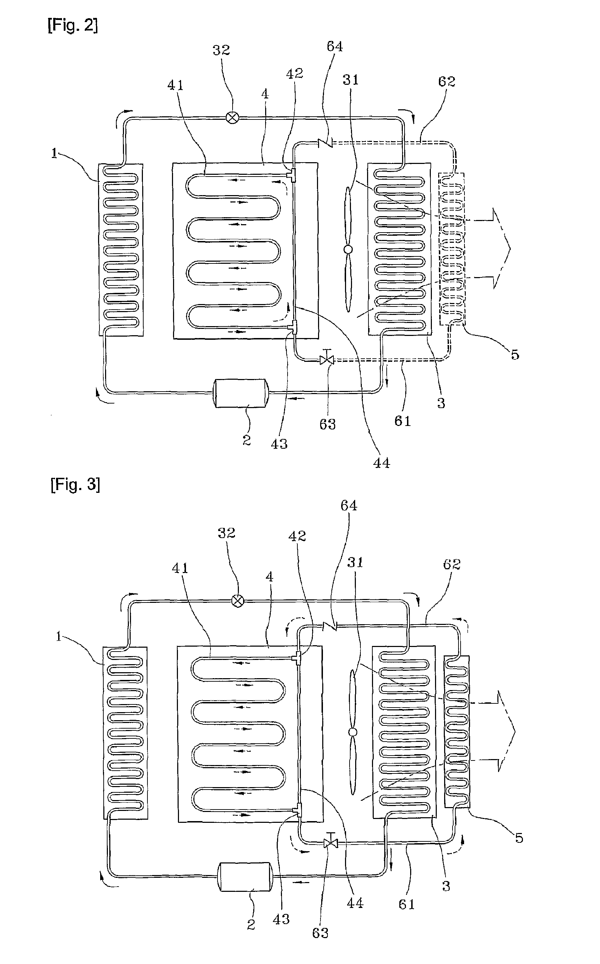

FIG. 1 is a conceptual diagram showing an installation state of a dehumidification system for a vehicle according to a preferred embodiment of the present invention, FIG. 2 is a brief view of an engine cooling state of the dehumidification system, and FIG. 3 is a brief view of a dehumidification state of the dehumidification system. The dehumidification system for the vehicle, which is installed in an air-conditioning system in which an inner refrigerant passes through an evaporator 3 with a blower fan 31 blowing air into the interior of the vehicle from a condenser 1 via an expansion valve 32, and then, is returned to the condenser 1 by a compressor 2, includes: a water jacket 4 with a conduit 41 that is extended therein for heat absorption, the water jacket 4 being positioned close to the vehicle engine in order to absorb the heat of the engine; a heat-exchanger 5 located on the path, in which the inside air of the vehicle is circulated and cooled by the blower fan 31, for removing the humidity by condensing the surrounding air; and a circulation conduit 6 having a first conduit 61 and a second conduit 62, the first conduit 61 supplying the heated fluid or gas in the water jacket to the heat-exchanger 5 and having a valve 63 mounted on the fluid or gas supply path, the second conduit 62 adapted to transfer and circulate the fluid or gas, which is condensed in the heat-exchanger 5, to the water jacket 4, the second conduit 62 having a check valve 64 formed in the middle thereof to move the fluid or gas in the fixed direction.

That is, the water jacket 4 receives heat of the vehicle engine to heat water or gas therein, and the heated water or gas is cooled in the heat-exchanger 5 mounted near to the blower fan 31, and in this instance, the outside air is condensed and dehumidified.

The present invention is characterized in that the dehumidification system uses heat unused in the vehicle engine as a heat source for operating the system and serves to cool the engine heated by the operation, and hence, it does not need additional energy.

Furthermore, in case that a normal cooling system is operated, it is actuated by an internal air circulation system without sucking the exterior air to the interior of the vehicle, and hence, dehumidification effect may be increased more.

Additionally, the conduit 41 formed in the water jacket 4 has first and second 3-way valves 42 and 43 respectively mounted at a start point and an end point thereof and a circulation conduit 44 formed to connect the first and second 3-way valves 42 and 43 with each other.

In case that the dehumidification system is not operated, when the valve 62 is turned off or when the fluid or gas passes through the first conduit 61 from the first and second 3-way valves 42 and 43 and is heat-exchanged in the heat-exchanger 5 and a flow of the fluid or gas is automatically controlled along the second conduit 62, the conduit 41 is connected with the circulation conduit 44, and hence, the water jacket 4 can be utilized as a water cooling system that cools the heat of the engine while water is circulated therein.

In this instance, the first and second 3-way valves 42 and 43 are valves branched in three directions to control and connect flow directions of the fluid or gas, and of course, they can be very useful if they are manufactured in a valve type to automatically control a flow of interior fluid.

In a dehumidification mode, the 3-way valves 42 and 43 may be controlled to prevent a flow of the fluid to the circulation conduit 44 or to allow the fluid can pass in the upward direction but cannot pass in the opposite direction, when viewed in the drawings, by the check valve that is mounted on the circulation conduit 44.

The water jacket 4 usually carries out the engine cooling action by circulating cooling water therein, and in the dehumidification mode, closes the circulation conduit 44 at the second 3-way valve 43 to flow the cooling water into the first conduit 61, so that it can carry out the dehumidification action using heat of the cooling water in the heat-exchanger 5. The cooling water which finishes heat-exchange in the heat-exchanger 5 is transferred to the check valve 64 through the second conduit 62, and then, the flow of the cooling water is controlled and kept from the second conduit 62 to the conduit 41 by the first 3-way valve 42.

## Claims

1. In an air-conditioning system in which an inner refrigerant passes through an evaporator (3) with a blower fan (31) blowing air into the interior of the vehicle from a condenser (1) via an expansion valve (32), and then, is returned to the condenser (1) by a compressor (2), a dehumidification system for a vehicle comprising:
a water jacket (4) with a conduit (41) that is extended therein for heat absorption, the water jacket (4) being positioned close to the vehicle engine in order to absorb the heat of the engine; a heat-exchanger (5) located on the path, in which the inside air of the vehicle is circulated and cooled by the blower fan (31), for removing the humidity by condensing the surrounding air; and
a circulation conduit (6) having a first conduit (61) and a second conduit (62), the first conduit (61) supplying the heated fluid or gas in the water jacket to the heat-exchanger (5) and having a valve (63) mounted on the fluid or gas supply path, the second conduit (62) adapted to transfer and circulate the fluid or gas, which is condensed in the heat-exchanger (5), to the water jacket (4), the second conduit (62) having a check valve (64) formed in the middle thereof to move the fluid or gas in the fixed direction.

2. The dehumidification system according to claim 1, wherein the conduit (41) formed in the water jacket (4) has first and second 3-way valves (42 and 43) respectively mounted at a start point and an end point thereof and a circulation conduit (44) formed to connect the first and second 3-way valves (42 and 43) with each other.
